# NEW EUROPEAN PATENT SPECIFICATION

(11) **EP 1 447 545 B2**
(45) Date of publication and mention of the opposition decision: **15.09.2010**
(45) Mention of the grant of the patent: 26.04.2006
(21) Application number: 04003408.4
(22) Date of filing: 16.02.2004
(51) Int. Cl.: F02D 9/10, F16K 1/22

(54) **Valve for an exhaust pipe**
Ventil für ein Abgasrohr
Vanne pour une tubulure d'échappement

(30) Priority: 17.02.2003 DE 20302520 U
(43) Date of publication of application: 18.08.2004
(73) Proprietor: Arvin Technologies, Inc., Troy, MI 48084-7186 (US)
(72) Inventor: Watts, Lee, 86368 Gersthofen (DE); Hogg, Andrew, Cottam Preston PR ONX (GB); Bush, Phillip, Fiskerton Lincoln Lincolnshire, LN3 4GD (GB)
(74) Representative: Prinz & Partner

(56) References cited:
- EP-A- 0 835 998
- DE-A- 3 707 904
- DE-A- 4 305 123
- DE-A- 19 526 144
- DE-A1- 10 006 795
- US-A- 5 632 304
- US-A1- 3 693 935
- US-A1- 5 631 761
- PATENT ABSTRACTS OF JAPAN vol. 1995, no. 07, 31 August 1995 (1995-08-31) & JP 07 091247 A (MIKUNI CORP;OTHERS: 01), 4 April 1995 (1995-04-04)
- PATENT ABSTRACTS OF JAPAN vol. 018, no. 640 (M-1717), 6 December 1994 (1994-12-06) & JP 06 248929 A (TOYOTA MOTOR CORP), 6 September 1994 (1994-09-06)
- PATENT ABSTRACTS OF JAPAN -& JP 2000 170551 A 20 June 2000

## Description

The invention relates to an exhaust pipe valve according to the preamble of claim 1.

Such exhaust pipe valve can be used in a plurality of applications, for example emissions, engine performance, acoustics and heat management. In the following, the valve will be described which is used for controlling flow of the exhaust gas through an exhaust gas heat exchanger as is used for an auxiliary heating system.

An auxiliary heating system is increasingly used in vehicles having modem combustion engines with low fuel consumption. These combustion engines produce, due to their high efficiency, only a small amount of lost heat which is available for the heating system for the vehicle. This results in a reduced heating performance of the heating system, which is considered as uncomfortable by the vehicle occupants. Accordingly, systems were being developed which use a heat exchanger arranged in the exhaust system of the vehicle. The heat exchanger allows to gain a certain proportion of the heat of the exhaust gas which then is available for heating the interior of the vehicle.

Such systems typically have an exhaust gas duct in which the heat exchanger is arranged, and a bypass duct. By controlling the proportion of the overall exhaust gas flowing through the heat exchanger duct, a desired heating characteristic of the system can be obtained. To this end, the exhaust pipe valve is provided which is controlled depending from external parameters.

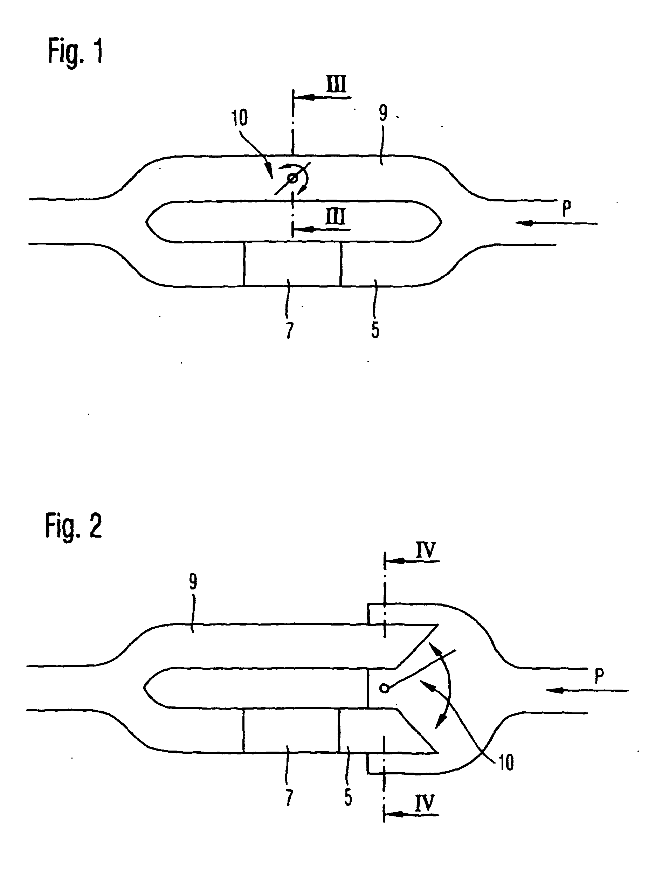

Two embodiments of such systems are now described with reference to Figures 1 and 2. In both systems, the exhaust gas enters in the direction of arrow P from the right side as regards the drawings. The system offers a heat exchanger duct 5 with a heat exchanger 7 for the exhaust gas, and a bypass duct 9. An exhaust pipe valve 10 is used for controlling the flow of the exhaust gas through heat exchanger duct 5 and bypass duct 9.

In the embodiment of Figure 1, the proportion of the gas flow through the ducts is controlled by varying the flow resistance of bypass duct 9. When valve 10 is in its completely opened position, the flow resistance of bypass duct 9 is significantly less than the flow resistance of heat exchanger 7 in heat exchanger duct 5, resulting in almost no gas flow through the heat exchanger. When valve 10 is in its completely closed position, the gas flow through bypass duct 9 is blocked, and the gas flows completely through heat exchanger 7, apart from a small leakage flow past valve 10. Controlling the position of the valve in intermediate positions allows to obtain any desired proportion of the gas flow through both ducts.

In the embodiment of Figure 2, the gas flow is controlled directly by operating valve 10 such that the inlet opening of heat exchanger duct 5 or bypass duct 9 is opened or closed. Here again, intermediate positions of valve 10 allow to obtain any desired proportion of the gas flow through the ducts.

The valves used for controlling the exhaust gas flow through the ducts pose two main problems. First, the valves must withstand high operating temperatures and sharp increases of their operating temperature while having a lifetime of 10 to 15 years. Second, the valves must prevent any leakage of exhaust gas from the exhaust gas side of the valve towards the exterior as such valves are typically employed upstream of a catalytic converter such that the leaking exhaust gas has not yet been purified.

If the valve is used in other applications, e.g. diesel heat recovery systems where no catalytic converter is used, prevention of leakage is nevertheless of high importance, for instance for acoustic performance and thermal management.

DE-A-195 26 144 shows an exhaust pipe valve of the type initially mentioned. The bearing sleeve serves as a radial bearing only. In addition to the radial bearing, a separate axial bearing is provided which is formed as a ring with a conical sealing surface on its side facing the valve plate. The sealing surface cooperates with a conical sealing shoulder on the valve spindle. On its side facing away from the sealing surface, the ring abuts a plate arranged in the housing. The spring is arranged between the plate and the washer which is attached to the valve spindle.

The object of the invention is to provide an exhaust pipe valve which is reliable, has a long lifetime and only a small leakage of exhaust gas.

To this end, the invention provides an exhaust valve of the type initially mentioned, which is characterized by the features of the characterizing portion of claim 1. This valve is of simple construction which is a precondition for a long lifetime. The bearing sleeve provides both for a seal against leakage of the exhaust gas towards the exterior and for a bearing in which the valve spindle is rotatably mounted. Provision of the sealing surfaces and the bearing surfaces on both sides of the bearing sleeve improve the sealing effect and the stability of the bearing.

Preferably, the sealing surfaces and the bearing surfaces are conical. This allows to precisely center the valve spindle within the bearing sleeve. Further, the sealing qualities are improved.

According to the preferred embodiment of the invention, the spring is arranged between a nut mounted on the valve spindle and the washer. The spring preferably is a spring washer made from Inconel. As there is no relative movement between the nut and the washer, friction losses occurring during rotation of the valve spindle are low. Further, the spring allows for compensation of thermal expansion of the components of the valve occurring during operation. The spring is preferably designed such that the biasing force provided remains essentially constant over the entire range of operating temperatures. The material of the spring is chosen such that the spring characteristic is not effected by the operating temperatures of the valve.

According to the preferred embodiment of the invention, the valve spindle is made from a material offering good heat resistance, for example steel with Werkstoff No. 1.4122 or 1.4104. Preferably, the sealing surface formed on the valve spindle is formed on a radially projecting shoulder formed integrally with the valve spindle.

In order to improve the sealing qualities between the valve spindle and the bearing sleeve, the valve spindle is preferably at least partially provided with a ceramic coating. The coating is at least provided on the primary sealing surface of the valve spindle. The ceramic coating ensures that the valve spindle can be rotated relatively to the bearing sleeve over a long lifetime and under high operating temperatures which may be in the region of up to 800°C. Simultaneously, the ceramic coating provides for a low surface roughness resulting in good sealing properties. The ceramic coating preferably contains Ti, Al and Cr. Additionally, Y and N may be present. Still further, a second ceramic coating may be provided over the first coating, this second coating containing Ti, Al and N.

Depending from constructional preconditions, the valve plate may be mounted centrically at the valve spindle or eccentrically. In any case, the valve spindle is preferably supported on only one side of the valve plate, resulting in low frictional losses and less strict requirements as regard the tolerances since it is not required to concentrically arrange two bearings on one side and the other of the valve plate.

In case higher loads act on the valve spindle, a second bearing on the opposite side of the valve plate may be used.

By having the bearing sleeve mounted in the housing with a press-fit, the press-fit eliminates the need for additional means for positioning or holding the bearing sleeve, means which otherwise could present problems as regards thermal expansion. A particularly suitable material for the bearing sleeve is steel with Werkstoff No. 1.4122 or 1.4104.

The invention will hereinafter be described by means of a preferred embodiment which is shown in the enclosed drawings. In the drawings,
- Figur 1- Figure 1 schematically shows a first embodiment of an exhaust gas heat exchanger system employing a valve according to the invention,
- Figur 2 - Figure 2 schematically shows a second embodiment of the system employing a valve according to the invention,
- Figur 3 - Figure 3 shows in an exploded view the valve used in the system of Figure 1,
- Figur 4 - Figure 4 shows in a sectional view the valve employed in the system of Figure 2,
- Figure 5 shows a sectional view of the valve shown in Figure 4,
- Figures 6 to 9 schematically show the process of mounting the valve.

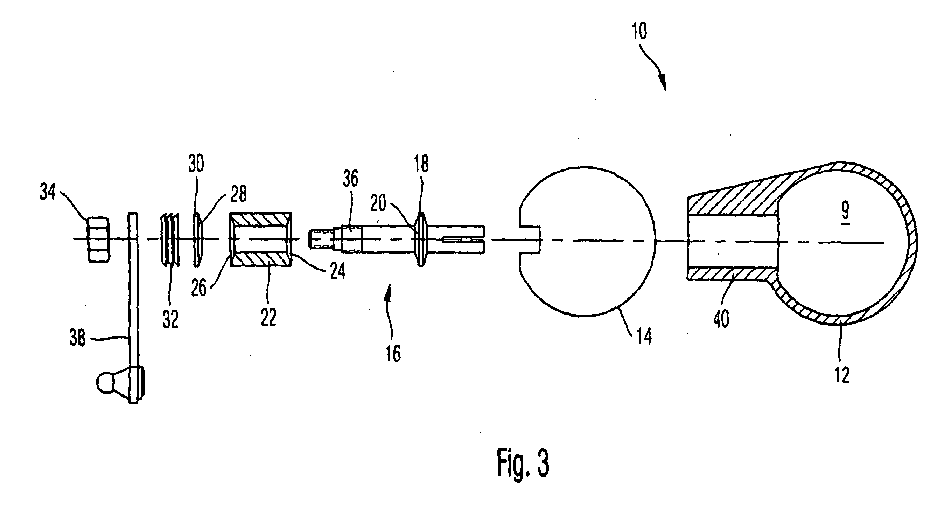

Figure 3 shows an exploded view of the valve according to the invention, employed in the system shown in Figure 1. The valve comprises a housing 12 which is part of bypass duct 9. In the interior of housing 12, a valve plate 14 is rotatably mounted. The contour of valve plate 14 corresponds to the inner contour of bypass duct 9 in housing 12.

Valve plate 14 is attached to a valve spindle 16 formed from heat resistant steel, in particular from steel with Werkstoff No. 1.4122 or 1.4104. For the valve plate, Werkstoff No. 1.4301 is particularly suitable. Valve spindle 16 comprises a radial shoulder 18 formed integrally with the valve spindle. Shoulder 18 is provided with a conical sealing surface 20 on its side facing away from valve plate 14.

Valve spindle 16 is rotatably mounted within a bearing sleeve 22 formed from steel with Werkstoff No. 1.4122 or 1.4104. On its side facing shoulder 18, bearing sleeve 22 is provided with a conical bearing surface 24. The inclination of bearing surface 24 corresponds to the inclination of sealing surface 20, with both surfaces forming an angle of approximately 20° with a radially extending plane.

Valve spindle 16 is provided with a coating, in particular in the region of sealing surface 20. This coating is made from a ceramic material comprising Ti, Al, Cr, Y and N. Over this first coating, a second coating is provided containing Ti, Al and N. These coatings provide a smooth, durable surface so that sealing surface 20 in cooperation with bearing surface 24 forms a primary seal almost entirely preventing any leakage of exhaust gas.

On its side facing away from valve plate 14, bearing sleeve 22 is provided with a secondary bearing surface 26 which is also formed conical. Secondary bearing surface 26 cooperates with a secondary, conical sealing surface 28 formed on a washer 30. Secondary sealing surface 28 is also formed conically. Washer 30 is formed from a thermally resistant material, in particular steel with Werkstoff No. 1.4122 or 1.4104. The coating described with regard to sealing surface 20 can also be provided on sealing surface 28 of washer 30.

A spring washer 32 made from Inconel is arranged on the side of washer 30 facing away from valve plate 14. Spring washer 32 is compressed by means of a nut 34 threaded on a thread 36 on valve spindle 16, with an operating lever 38 being arranged between nut 34 and spring washer 32. Operating lever 38 is acted on by a stepper motor or any comparable actuation unit allowing to position valve plate 14 in any desired orientation.

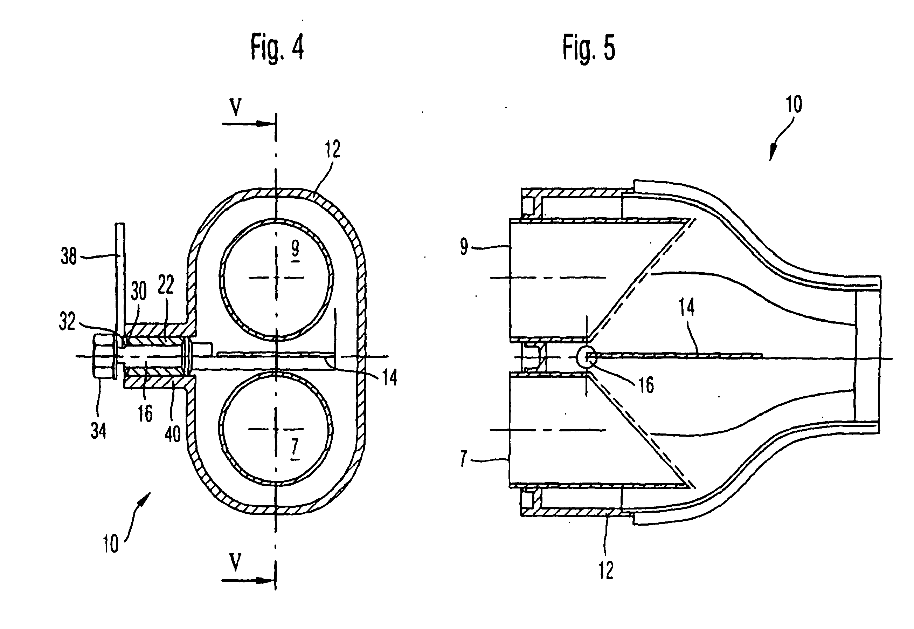

The valve shown in Figures 4 and 5 corresponds to the valve shown in Figure 3 as regards the bearing of valve spindle 14. The main difference is that valve plate 14 is not essentially circular and mounted centrically to valve spindle 14, but extends eccentrically from valve spindle 14. Both valves have in common that the valve plate is supported on only one of its sides. This is possible since bearing sleeve 22 has a certain extent in the axial direction, leading to a comparatively large distance between the primary and the secondary bearing surfaces. This distance provides a stability which is sufficient for counteracting any tilting loads introduced by valve plate 14, without requiring an additional bearing on the opposite side of valve plate 14.

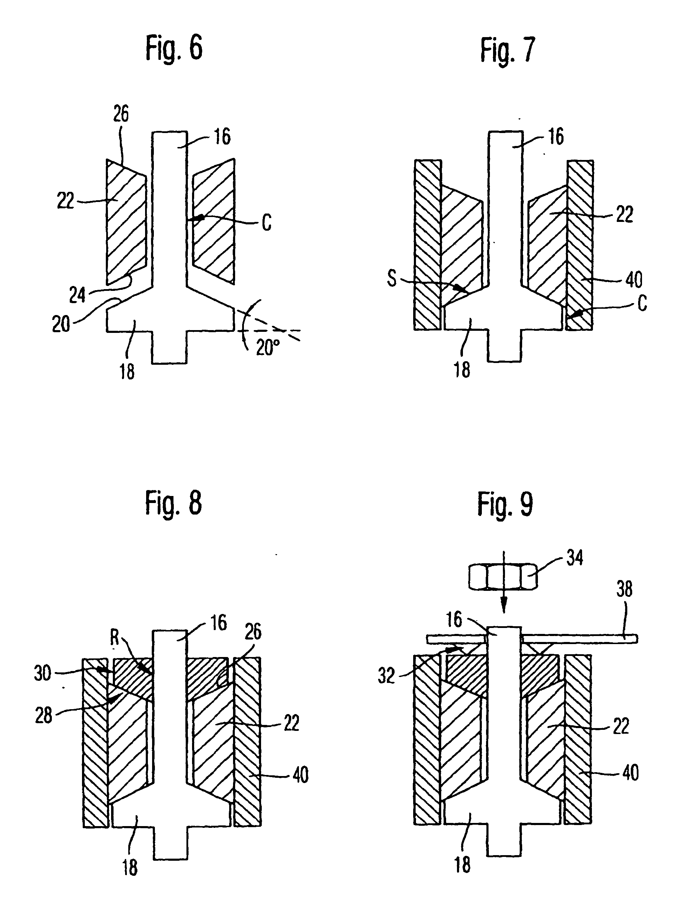

Figures 6 to 9 show the steps of mounting the bearing for valve spindle 14. In a first step shown in Figure 6, bearing sleeve 22 is arranged on valve spindle 16 such that bearing surface 24 cooperates with sealing surface 20. In order to prevent seizure, there is a significant clearance C between the inner opening of bearing sleeve 22 and valve spindle 16.

In a second step shown in Figure 7, bearing sleeve 22 is pressed into a cylindrical portion 40 provided on housing 12. The dimensions of cylindrical portion 40 and bearing sleeve 22 are such that there is a press-fit between the bearing sleeve and the housing. The friction resulting from the press-fit is sufficient to securely hold bearing sleeve 22 at its place, without additional holding means being required. As can be seen in Figure 7, a significant clearance C is provided between radial shoulder 18 of valve spindle 16 and cylindrical portion 40 of the housing. This again prevents seizure. As can be further seen in Figure 7, cooperation of bearing surface 24 with sealing surface 20 forms a primary seal S which prevents leakage of exhaust gas from the interior of the housing.

In a third step shown in Figure 8, washer 30 is mounted on valve spindle 16 such that secondary sealing surface 28 of washer 30 cooperates with secondary bearing surface 26 of bearing sleeve 22, thereby forming a secondary seal. Washer 30 is dimensioned such that there is a very close running clearance R between the inner opening of washer 30 and valve spindle 16. Close clearance R ensures that valve spindle 16 is correctly centered within washer 30, thereby ensuring precise positioning of valve plate 14.

As shown in Figure 9, spring washer 32 and operating lever 38 are mounted on valve spindle 16, and nut 34 is tightened so as to preload spring washer 32. The preload is chosen such that there is a good compromise between low frictional forces between valve spindle 16 and bearing sleeve 22 on the one hand, and small leakage past the primary and secondary seals.

### List of reference numerals

- 5: Heat exchanger duct
- 7: Heat exchanger
- 9: Bypass duct
- 10: Exhaust pipe valve
- 12: Housing
- 14: Valve plate
- 16: Valve spindle
- 18: Shoulder
- 20: Primary sealing surface
- 22: Bearing sleeve
- 24: Primary bearing surface
- 26: Secondary bearing surface
- 28: Secondary sealing surface
- 30: Washer
- 32: Spring washer
- 34: Nut
- 36: Thread
- 38: Operating lever
- 40: Cylindrical portion

## Claims

1. Exhaust pipe valve having a housing (12), a bearing sleeve (22) mounted in the housing, a valve spindle (16) rotatably mounted in the bearing sleeve, a valve plate (14) mounted at the valve spindle, a washer (30) arranged on the valve spindle, and a spring (32), wherein the bearing sleeve (22) has a primary bearing surface (24) on its side facing the valve plate, wherein the valve spindle (16) has a primary sealing surface (20) cooperating with the primary bearing surface of the bearing sleeve, wherein the washer cooperates with the bearing sleeve on its side facing away from the valve plate, and wherein the spring (32) biases the primary sealing surface (20) of the valve spindle (14) against the primary bearing surface (24) of the bearing sleeve (22) white biasing the washer (30) against the bearing sleeve (22), **characterized in that** a secondary bearing surface (26) is formed on the side of the bearing sleeve (22) facing away from the valve plate, **in that** a secondary sealing surface (28) is formed on the washer (30) for cooperation with the secondary bearing surface, and **in that** the bearing sleeve (22) is mounted in the housing (12) with a press-fit.

2. The exhaust pipe valve according to claim 1, **characterized in that** the sealing surfaces (20, 28) are conical.

3. The exhaust pipe valve according to any of the preceding claims, **characterized in that** the bearing surfaces (24, 26) are conical.

4. The exhaust pipe valve according to any of the preceding claims, **characterized in that** the spring (32) is arranged between a nut mounted on the valve spindle and the washer.

5. The exhaust pipe valve according to claim 4, **characterized in that** the spring is a spring washer (32).

6. The exhaust pipe valve according to claim 5, **characterized in that** the spring washer (32) is made from Inconel.

7. The exhaust pipe valve according to any of the preceding claims, **characterized in that** the valve spindle (14) is made from steel with Werkstoff No. 1.4122 or 1.4104.

8. The exhaust pipe valve according to any of the preceding claims, **characterized in that** the valve plate (14) is mounted centrically at the valve spindle (16) and cooperates with the inner wall of the housing (12).

9. The exhaust pipe valve according to any of claims 1 to 7, **characterized in that** the valve plate (14) is mounted eccentrically at the valve spindle (16) and cooperates with two valve seats provided in the interior of the housing (12).

10. The exhaust pipe valve according to any of the preceding claims, **characterized in that** a lever (38) is attached to the valve spindle (16) for operation of the valve plate (14).

11. The exhaust pipe valve according to any of the preceding claims, **characterized in that** the housing comprises a cylindrical portion (40) in the interior of which the bearing sleeve (22) is mounted.

12. The exhaust pipe valve according to any of the preceding claims, **characterized in that** the bearing sleeve (22) is made from steel with Werkstoff No. 1.4122 or 1.4104.

13. The exhaust pipe valve according to any of the preceding claims, **characterized in that** the valve spindle (14) is at least partially provided with a ceramic coating.

14. The exhaust pipe valve according to claim 13, further having a washer (30) which is at least partially provided with a ceramic coating.

15. The exhaust pipe valve according to any of claims 13 and 14, **characterized in that** the ceramic coating contains Ti, Al and Cr.

16. The exhaust pipe valve according to claim 15, **characterized in that** the ceramic coating further contains Y and N.

17. The exhaust pipe valve according to claim 16, **characterized in that** a second ceramic coating is provided over the first coating, the second coating containing Ti, Al and N.

## Patentansprüche

1. Abgasleitungs-Ventil mit einem Gehäuse (12), einer Lagerhülse (22), die in dem Gehäuse angebracht ist, einer Ventilspindel (16), die drehbar in der Lagerhülse angebracht ist, einer Ventilplatte (14), die an der Ventilspindel angebracht ist, einer Scheibe (30), die auf der Ventilspindel angeordnet ist, und einer Feder (32), wobei die Lagerhülse (22) eine primäre Lagerfläche (24) auf ihrer der Ventilplatte zugewandten Seite aufweist, wobei die Ventilspindel (16) eine primäre Dichtfläche (20) aufweist, die mit der primären Lagerfläche der Lagerhülse zusammenwirkt, wobei die Scheibe mit der Lagerhülse auf ihrer von der Ventilplatte abgewandten Seite zusammenwirkt und wobei die Feder (32) die primäre Dichtfläche (20) der Ventilspindel (14) gegen die primäre Lagerfläche (24) der Lagerhülse (22) beaufschlagt, während die Scheibe (30) gegen die Lagerhülse (22) beaufschlagt wird, **dadurch gekennzeichnet, dass** auf der von der Ventilplatte abgewandten Seite der Lagerhülse (22) eine sekundäre Lagerfläche (26) gebildet ist, dass auf der Scheibe (30) eine sekundäre Dichtfläche (28) gebildet ist, die mit der sekundären Lagerfläche zusammenwirkt, und dass die Lagerhülse (22) mittels einer Presspassung im Gehäuse (12) angebracht ist.

2. Abgasleitungs-Ventil nach Anspruch 1, **dadurch gekennzeichnet, dass** die Dichtflächen (20, 28) konisch sind.

3. Abgasleitungs-Ventil nach einem der vorhergehenden Ansprüche, **dadurch gekennzeichnet, dass** die Lagerflächen (24, 26) konisch sind.

4. Abgasleitungs-Ventil nach einem der vorhergehenden Ansprüche, **dadurch gekennzeichnet, dass** die Feder (32) zwischen einer auf der Ventilspindel angebrachten Mutter und der Scheibe angeordnet ist.

5. Abgasleitungs-Ventil nach Anspruch 4, **dadurch gekennzeichnet, dass** die Feder eine Federscheibe (32) ist.

6. Abgasleitungs-Ventil nach Anspruch 5, **dadurch gekennzeichnet, dass** die Federscheibe (32) aus Inconel besteht.

7. Abgasleitungs-Ventil nach einem der vorhergehenden Ansprüche, **dadurch gekennzeichnet, dass** die Ventilspindel (14) aus Stahl mit den Werkstoffnummern 1.4122 oder 1.4104 besteht.

8. Abgasleitungs-Ventil nach einem der vorhergehenden Ansprüche, **dadurch gekennzeichnet, dass** die Ventilplatte (14) zentrisch an der Ventilspindel (16) angebracht ist und mit der Innenwand des Gehäuses (12) zusammenwirkt.

9. Abgasleitungs-Ventil nach einem der Ansprüche 1 bis 7, **dadurch gekennzeichnet, dass** die Ventilplatte (14) exzentrisch an der Ventilspindel (16) angebracht ist und mit zwei Ventilsitzen zusammenwirkt, die im Inneren des Gehäuses (12) vorgesehen sind.

10. Abgasleitungs-Ventil nach einem der vorhergehenden Ansprüche, **dadurch gekennzeichnet, dass** an der Ventilspindel (16) ein Hebel (38) angebracht ist, um die Ventilplatte (14) zu betätigen.

11. Abgasleitungs-Ventil nach einem der vorhergehenden Ansprüche, **dadurch gekennzeichnet, dass** das Gehäuse einen zylindrischen Abschnitt (40) aufweist, in dessen Innerem die Lagerhülse (22) angebracht ist.

12. Abgasleitungs-Ventil nach einem der vorhergehenden Ansprüche, **dadurch gekennzeichnet, dass** die Lagerhülse (22) aus Stahl mit den Werkstoffnummern 1.4122 oder 1.4104 besteht.

13. Abgasleitungs-Ventil nach einem der vorhergehenden Ansprüche, **dadurch gekennzeichnet, dass** die Ventilspindel (14) wenigstens teilweise mit einer Keramikbeschichtung versehen ist.

14. Abgasleitungs-Ventil nach Anspruch 13, außerdem mit einer Scheibe (30), die wenigstens teilweise mit einer Keramikbeschichtung versehen ist.

15. Abgasleitungs-Ventil nach einem der Ansprüche 13 und 14, **dadurch gekennzeichnet, dass** die Keramikbeschichtung Ti, Al und Cr enthält.

16. Abgasleitungs-Ventil nach Anspruch 15, **dadurch gekennzeichnet, dass** die Keramikbeschichtung außerdem Y und N enthält.

17. Abgasleitungs-Ventil nach Anspruch 16, **dadurch gekennzeichnet, dass** auf der ersten Beschichtung eine zweite Keramikbeschichtung vorgesehen ist, wobei die zweite Beschichtung Ti, Al und N enthält.

## Revendications

1. Soupape de conduite d'échappement comportant un boîtier (12), un coussinet de palier (22) qui est monté dans le boîtier, une tige de soupape (16) qui est montée rotative dans le coussinet de palier, une plaque de soupape (14) montée sur la tige de soupape, une rondelle (30) agencée sur la tige de soupape et un ressort (32), le coussinet de palier (22) présentant une surface d'appui primaire (24) sur son côté tourné vers la plaque de soupape, la tige de soupape (16) présentant une surface d'étanchéité primaire (20) qui coopère avec la surface d'appui primaire du coussinet de palier, la rondelle coopérant avec le coussinet de palier sur son côté détourné de la plaque de soupape, et le ressort (32) sollicitant la surface d'étanchéité primaire (20) de la tige de soupape (14) contre la surface d'appui primaire (24) du coussinet de palier (22) tandis que la rondelle (30) est sollicitée contre le coussinet de palier (22), **caractérisée en ce que** sur le côté du coussinet de palier (22), qui est détourné de la plaque de soupape, est formée une surface d'appui secondaire (26), **en ce que** sur la rondelle (30) est formée une surface d'étanchéité secondaire (28) qui coopère avec la surface d'appui secondaire, et **en ce que** le coussinet de palier (22) est monté dans le boîtier (12) avec ajustage serré.

2. Soupape de conduite d'échappement selon la revendication 1, **caractérisée en ce que** les surfaces d'étanchéité (20, 28) sont coniques.

3. Soupape de conduite d'échappement selon l'une des revendications précédentes, **caractérisée en ce que** les surfaces d'appui (24, 26) sont coniques.

4. Soupape de conduite d'échappement selon l'une des revendications précédentes, **caractérisée en ce que** le ressort (32) est agencé entre un écrou monté sur la tige de soupape et la rondelle.

5. Soupape de conduite d'échappement selon la revendication 4, **caractérisée en ce que** le ressort est une rondelle élastique (32).

6. Soupape de conduite d'échappement selon la revendication 5, **caractérisée en ce que** la rondelle élastique (32) est en Inconel.

7. Soupape de conduite d'échappement selon l'une des revendications précédentes, **caractérisée en ce que** la tige de soupape (14) est en acier avec les numéros de matériau 1.4122 ou 1.4104.

8. Soupape de conduite d'échappement selon l'une des revendications précédentes, **caractérisée en ce que** la plaque de soupape (14) est montée de manière centrée sur la tige de soupape (16) et coopère avec la paroi intérieure du boîtier (12).

9. Soupape de conduite d'échappement selon l'une des revendications 1 à 7, **caractérisée en ce que** la plaque de soupape (14) est montée de manière excentrique sur la tige de soupape (16) et coopère avec deux sièges de soupape qui sont prévus à l'intérieur du boîtier (12).

10. Soupape de conduite d'échappement selon l'une des revendications précédentes, **caractérisée en ce que** sur la tige de soupape (16) est monté un levier (38) pour actionner la plaque de soupape (14).

11. Soupape de conduite d'échappement selon l'une des revendications précédentes, **caractérisée en ce que** le boîtier présente un tronçon cylindrique (40) à l'intérieur duquel est monté le coussinet de palier (22).

12. Soupape de conduite d'échappement selon l'une des revendications précédentes, **caractérisée en ce que** le coussinet de palier (22) est en acier avec les numéros de matériau 1.4122 ou 1.4104.

13. Soupape de conduite d'échappement selon l'une des revendications précédentes, **caractérisée en ce que** la tige de soupape (14) est pourvue au moins partiellement d'un revêtement en céramique.

14. Soupape de conduite d'échappement selon la revendication 13, pourvue en outre d'une rondelle (30) qui est pourvue au moins partiellement d'un revêtement en céramique.

15. Soupape de conduite d'échappement selon l'une des revendications 13 et 14, **caractérisée en ce que** le revêtement en céramique contient Ti, Al et Cr.

16. Soupape de conduite d'échappement selon la revendication 15, **caractérisée en ce que** le revêtement en céramique contient en outre Y et N.

17. Soupape de conduite d'échappement selon la revendication 16, **caractérisée en ce que** sur le premier revêtement est prévu un deuxième revêtement en céramique, le deuxième revêtement contenant Ti, Al et N.
